# EUROPEAN PATENT SPECIFICATION

(11) **EP 2 960 054 B1**
(45) Date of publication and mention of the grant of the patent: **12.10.2022**
(21) Application number: 15174147.7
(22) Date of filing: 26.06.2015
(51) Int. Cl.: B32B 27/16, B32B 38/00, B32B 27/32, B29C 59/14

(54) **SURFACE-TREATED FILMS WITH POLYPROPYLENE BASE**
OBERFLÄCHENBEHANDELTE FILME AUF POLYPROPYLENBASIS
FILMS TRAITÉS EN SURFACE À BASE DE POLYPROPYLÈNE

(30) Priority: 26.06.2014 IT MI20141164
(43) Date of publication of application: 30.12.2015
(73) Proprietor: Taghleef Industries SPA, 33058 San Giorgio Di Nogaro (UD) (IT)
(72) Inventor: GARZITTO, Valerio, 33058 San Giorgio di Nogaro (Udine) (IT); PIASENTE, Francesca, 33058 San Giorgio di Nogaro (Udine) (IT); BARDI, Emanuela, 33058 San Giorgio di Nogaro (Udine) (IT)
(74) Representative: Mazzitelli, Maria

(56) References cited:
- EP-A1- 2 113 378
- EP-A2- 1 591 236
- WO-A1-02/083414
- WO-A1-2015/019062
- WO-A2-2008/033622
- WO-A2-2009/087659
- FR-A1- 2 873 705
- US-A- 3 870 610
- US-A- 6 033 786
- US-A1- 2005 260 427
- US-A1- 2008 131 616
- US-A1- 2009 252 893
- US-A1- 2014 083 608
- M. CERNÁK ET AL: "Diffuse Coplanar Surface Barrier Discharge and its applications for in-line processing of low-added-value materials", THE EUROPEAN PHYSICAL JOURNAL APPLIED PHYSICS, vol. 47, no. 2, 4 July 2009 (2009-07-04), page 22806, XP055176222, ISSN: 1286-0042, DOI: 10.1051/epjap/2009131
- CARRINO L ET AL: "Ageing time of wettability on polypropylene surfaces processed by cold plasma", JOURNAL OF MATERIALS PROCESSING TECHNOLOGY, ELSEVIER, NL, vol. 153-154, 10 November 2004 (2004-11-10), pages 519-525, XP027526974, ISSN: 0924-0136 [retrieved on 2004-12-10]

## Description

The present invention relates to multilayer coextruded films, bi-oriented or cast, which contain at least one layer of polypropylene, preferably bi-oriented polypropylene (BOPP) or cast polypropylene (CPP) films, for use as substrates for flexible packaging and/or labels, wherein at least one of the outer surfaces of the film, made of a polymeric material of the polyolefin type, is treated appropriately to achieve a level of surface wettability such as to allow all the subsequent processes of coating and/or machining of said films, for example metallizing, lacquering, ink printing, lamination or other coatings (for example coating with deposits of AlOₓ), preferably metallizing, lacquering, ink printing, and also relates to the process for achieving this level of surface wettability.

More particularly the present invention relates to these films having a greater uniformity of surface wettability level, even at low thicknesses and cavitated, for example lower than 15 µm, which are able also to result in metallized, printed, lacquered, laminated films, or with other deposits/coatings, having a high adhesion to the substrate and/or high barrier properties, for example a high barrier to humidity (low WVTR), after coating.

Even more particularly the present invention relates to a process for furnishing at least one of the outer surfaces of the abovementioned films, also of reduced thickness or cavitated, with an improved level of surface wettability, which is also durable for a prolonged time, obtaining in this way improved properties of surface adhesion and also improved barrier properties, for example after metallizing and storage.

Polyolefins, and also other polymeric materials, are known for having a surface which is difficult to wet, and for this reason the treatments of printing, lacquering, lamination or coating such as for example metallizing, cannot give good results if these surfaces are not adequately treated.

In light of this the surfaces of the films, in particular those in bi-oriented polypropylene or cast polypropylene, are subjected mainly to a corona discharge treatment to bring the surface wettability to a level of at least 36 - 38 mN/m, which is considered the minimum value in order to have an adequate adhesion of the print, of the lacquer, or of various deposits such as for example of metallizing.

The industrial corona discharge treatment, better defined as filamentary dielectric barrier discharge (DBD), is generated with a device composed of two metal electrodes, wherein at least one, usually the metal roller, which is connected to earth, is coated with a layer of dielectric material. The gap between the two electrodes, where the discharge is generated, is of the order of some mm. When the electrical field around the active electrode (with high voltage) is sufficient for inducing the ionisation of the species present within the gap the discharge is initiated. The electrons present naturally in the gas (primary electrons) are accelerated in the presence of the electrical field and, if they possess sufficient energy, can cause the ionisation of the neutral molecules with which they collide inelastically, thus generating further electrons, known as secondary electrons. These processes are multiplied and self-support themselves, leading to the formation of electron avalanches.

Although this treatment is generally effective, the atoms of oxygen involved in the process cause, as well as surface oxidation, also the scission of the polymeric chains of the surface layers of the film and the formation on its surface of compounds with low molecular weight (oligomers). The presence of these compounds can jeopardise the adhesion of possible coatings, for example inks, lacquers or inorganic coatings, on the surface of the film treated. See, for example, what is stated in: M. Strobel, V. Jones, C.S. Lyons, M. Ulsh, M. Kushner, R. Dorai, M. C. Branch, A Comparison of Corona-Treated and Flame-Treated Polypropylene Films, Plasmas and Polymers, Vol. 8, No. 1, March 2003.

Moreover, increasing the power of treatment in order to reach high levels of surface wettability (greater than 45 mN/m) not only triggers the formation of a greater quantity of oligomers on the surface, but also increases the production of ozone which, as well as being a highly poisonous gas, tends to penetrate the polymeric film resulting in a pungent odour which can jeopardise the use of the film for purposes of food packaging.

A further disadvantage of the corona discharge treatment is the formation of pinholes on the polymeric film. The pinholes are formed when the corona discharge is very localised because the discharge roller is contaminated or the coating is defective and the resulting current can damage the polymeric substrate. These holes can easily be observed when the film is printed or metallized and jeopardise, as well as the aesthetic appearance of the film (print not sufficiently defined), its barrier properties after the coating. See for example what is stated in R. Wolf, A. Sparavigna, PROBLEMI NASCOSTI DEL TRATTAMENTO SUPERFICIALE I - II pinholing, CONVERTER/Flessibili - Carta - Cartone, 2008, pp. 96-102.

Finally, the effect of the corona discharge treatment on the surface of the film undergoes degradation in time.

Therefore, in the eventuality of a prolonged period of disuse before the coating treatment, for example longer than 6 months, said surface-treated films need very often a surface reactivation. This, however, cannot be possible if the successive transformers of the treated film do not have a surface treatment system, as occurs in the case of small firms, or an adequate treatment unit.

Moreover such reactivation is limited in the level of surface wettability that can be obtained and is not in general effective on all films.

Another method of surface treatment for achieving an adequate adhesion to films in bi-oriented polypropylene or cast polypropylene is represented by the flame treatment which consists in subjecting the outer surface of a film, placed on a cooled roller, to a flame coming from a grid burner which air and a comburent gas are fed into. This process allows the chemical structure of the film surface to be modified by grafting of functional groups containing oxygen, as occurs for the corona discharge treatment.

The flame treatment, while achieving a higher surface wettability more stable in time with respect to the corona discharge treatment, has the main disadvantage of being difficult to use on materials sensitive to heat and/or on films of low thickness.

For example a film in BOPP with thickness of 15 µm or a cavitated BOPP film (voided) are extremely difficult to be treated with the flame because they resist the heat less easily compared, respectively, to a film of greater thickness or non-cavitated film.

It is therefore highly desirable in the sector of bi-oriented polypropylene or cast polypropylene films for flexible packaging and/or labels to have substrate films with at least one outer surface with high wettability and surface uniformity of the same, which is also durable for prolonged periods of time, also in the case of films with low thickness and/or otherwise sensitive to the heat (e.g. cavitated).

Another very desirable feature in the aforesaid sector of plastic films for flexible packagings and/or labels is that of having such films made from polypropylene, bi-oriented or cast, able to create coated and/or processed films, for example metallized, lacquered, printed films or with other coatings, which exhibit a high or improved adhesion of the coating such as to meet the property requirements of the aforesaid sector.

The patent FR 2873705 describes a treatment with cold atmospheric plasma with nitrogen to modify the surface of a polyester or polyamide single-layer film, in particular the surface of a film of PET, to improve the adhesion to a film of single-layer PE so as to form a two-layer bonded film.

This document however does not investigate the duration and/or the decline in time of the surface wettability of a polyolefinic polymer treated with atmospheric plasma.

The patent application WO 2009/087659 describes a flexible multilayer film whose central inner layer (core) is pre-treated with plasma prior to metallizing of the surface,

This document however does not describe the working conditions of this plasma treatment, the wettability value of the surface of a polyolefinic polymer obtained with said plasma treatment nor the duration in time of this plasma treatment.

The patent application US 2008/131616 describes a process for treating the surface of a substrate for building and/or architecture, in polymeric material, painted wood or in painted aluminium, by means of the use of atmospheric plasma to facilitate the deposition of layers of SiOx.

This document however does not describe the value of wettability achieved by a polyolefinic substrate treated on the surface with atmospheric plasma nor the duration in time of this plasma treatment.

The article *"*Ageing time of wettability on polypropylene surfaces processed by cold plasma", by L. Carrino, W. Polini, L. Sorrentino, published in J. of Material Processing Technology, 153-154 (2004), pp. 519-525, describes a study which gives the time of decline of a cold plasma treatment of the prior art (in vacuum), generated with air and operating at a rate of around 0.0024 m²/min. for a time of approximately 30 seconds, so as to determine the interval of time in which to perform an effective coating of elements in PP intended for the production of car bumpers. This treatment is performed on a rigid element in polypropylene obtaining a minimum decrease of the contact angle equal to 22% (depending on the process conditions) measured after no more than 10 days after the treatment,

This study however does not investigate the duration and/or the decay of the treatment on polypropylene for intervals of time greater than 10 days, for example in a period of time of at least 6 months,

The patent application WO 02/083414 A1 discloses multilayer films comprising a core layer comprising polypropylene and studies the surface tension, oxygen and moisture barrier properties and adhesion after 6 months of surfaces of the multilayer films which have been subjected to air plasma or flame treatment.

The objective of the present invention is therefore that of overcoming, at least in part, the disadvantages of the prior art by providing multilayer, bi-oriented or cast coextruded films, also of reduced thickness or cavitated, which contain at least one inner layer of polypropylene with surface treatment so as to have at least one surface with surface wettability greater than or equal to 38 mN/m, preferably greater than or equal to 40 mN/m, even more preferably greater than or equal to 45 mN/m, so as to obtain improved results of adhesion in subsequent conversion steps, and wherein this wettability is also durable for a prolonged period, for example longer than 6 months, preferably for at least 8-10 months, more preferably for a period longer than or equal to 12 months, even up to two years, so as not to require surface reactivation,

Another objective is that of providing these films having also a greater surface uniformity of the treatment so as to create metallized, lacquered, printed films or with other deposits/coatings, having a high or improved adhesion to the substrate, for example after metallizing, and without pinholes, able to meet the requirements of the sector.

A further objective is that of providing these films by means of a process which is ecologically sustainable, which does not have the disadvantages of the known processes described above, and which can be used to treat the surface of any type of film, also cavitated and/or films of low thickness and/or sensitive to heat, containing at least one layer in polypropylene.

Yet another objective is that of providing a process for furnishing the films indicated above with an adequate wettability which does not decline substantially for at least 6 months and/or which declines in time to a lesser extent with respect to known treatments.

These and other objectives are achieved by the plasma surface treatment process in accordance with the invention having the features listed in the appended independent claim 1. The present invention further provides bi-oriented or cast multilayer coextruded films as defined in claim 4 and metallized, printed, laminated, lacquered films or films with other coatings as defined in claim 8.

Advantageous embodiments of the invention are disclosed by the dependent claims.

An object of the present invention relates to bi-oriented or cast multilayer films, which contain at least one inner layer of polypropylene, having two opposite outer surfaces, characterised in that at least one of said outer surfaces belongs to a polymeric layer with a base of one or more olefins and in that this surface, which is pre-treated with a flow of non-thermal plasma at a pressure of 100-200 Pascal higher than the atmospheric pressure, has a surface wettability greater than or equal to 45 mN/m, and also durable in time for at least 10 months or also for a longer period of time.

Said non-thermal plasma flow, at a pressure higher than the atmospheric pressure, is generated essentially by a carrier gas selected from argon, helium, nitrogen or mixtures thereof, optionally containing one or more dopant gases.

Such dopant gases may be selected between, in particular, oxidizing dopant gases such as for example carbon dioxide (CO₂), carbon monoxide (CO), oxides of nitrogen or sulphur, or reductant dopant gases, for example hydrogen (H₂), acetylene (C₂H₂), ethylene (C₂H₄), or mixtures and/or combinations thereof.

In these films the outer surface of the multilayer film which is treated with the plasma is that intended to be machined and/or coated subsequently by means of, for example, printing, metallizing, lamination or similar coatings.

By multilayer coextruded films, bi-oriented or cast ones, which contain at least one layer of polypropylene, the intention here is to identify films composed of
at least one central or core inner polymeric layer, for example of polypropylene;
at least two outer and opposite polymeric layers (skins), identical to or different one from the other, whereof at least one of said opposite outer layers is intended for printing, metallizing, lamination or other coatings and is formed by at least one polymer which is based on one or more olefins, preferably formed by polypropylene, wherein one or more further optional intermediate layers can be provided between the central layer and the outer skins.

Preferably also the second outer layer, which is not treated with plasma, is formed by at least one polymer based on one or more olefins, preferably chosen from ethylene, propylene, butylene, α-olefin having from 5 to 10 carbon atoms.

This olefin(s)-based polymer has also such rheological properties as to be able to be coextruded through a thin flat head or in a bubble, in particular it has a melt flow index (MFI) generally below 20 g/10 min, preferably below 10 g/10 min, more preferably comprised within the range between 2 and 8 g/10 min.

The polyolefinic polymers having the aforesaid rheological features are different from those used in the processes of injection moulding, for example for producing car bumpers, in that the latter generally have an MFI greater than 20 g/10 min.

See, for example, what is stated in *"Handbook of Polypropylene and Polypropylene Composites, Revised and Expanded"* by Harutun Karian, in chapter 2 relating to films and products for the automotive industry.

In particular the two opposite outer layers (skin layers) can comprise advantageously the following polymers:
a) a polypropylene homopolymer;
b) a copolymer of
   - ethylene and propylene, or
   - ethylene and butylene, or
   - propylene and butylene, or
   - ethylene and another α-olefin having from 5 to 10 carbon atoms, or
   - propylene and another α-olefin having from 5 to 10 carbon atoms;
c) a terpolymer of
   - ethylene, propylene and butylene, or
   - ethylene, propylene and another α-olefin having from 5 to 10 carbon atoms,
      or
d) a mixture of two or more of said homopolymers, copolymers, and/or terpolymers; or
e) a blend of two or more of said homopolymers, copolymers, and/or terpolymers; or
f) a blend of two components A and B, wherein the component A is an HDPE having a melt flow index (MFI) greater than 1 g/10min up to 50 g/10min and the component B is selected from the group consisting of
   - polypropylene homopolymer;
   - copolymer of ethylene and propylene
   - copolymer of ethylene and butylene
   - copolymer of propylene and butylene,
   - copolymer of ethylene and another α-olefin having from 5 to 10 carbon atoms,
   - copolymer of propylene and another α-olefin having from 5 to 10 carbon atoms;
   - terpolymer of ethylene, propylene and butylene,
   - terpolymer of ethylene, propylene and another α-olefin having from 5 to 10 carbon atoms,
   - a mixture of two or more of said homopolymers, copolymers, and/or terpolymers, or
   - a blend of two or more of said homopolymers, copolymers, and/or terpolymers.

In a preferred embodiment the component B of the blend f) described above comprises
- polypropylene homopolymer,
- copolymer of ethylene and propylene,
- copolymer of ethylene and 1-butylene,
- copolymer of propylene and 1-butylene,
- a terpolymer of ethylene, propylene and 1-butylene,
- a mixture of two or more of said homopolymers, copolymers, and/or terpolymers,
- a blend of two or more of said preferred homopolymers, copolymers, and/or terpolymers, with particular preference for the propylene homopolymers,
- random ethylene-propylene copolymers having an ethylene content of about 2% to about 10% by weight, preferably from about 5% to about 8% by weight, with respect to the total weight of the copolymer,
- random propylene-1-butylene copolymers having a butylene content from about 4% to about 25% by weight, preferably from about 10% to about 20% by weight, with respect to the total weight of the copolymer,
- random ethylene-propylene-1-butylene terpolymers having an ethylene content from about 1% to about 10% by weight, preferably from about 2% to about 6% by weight, and with a content of 1-butylene from about 3% to about 20% by weight, preferably from about 8% to about 10% by weight, with respect to the total weight of the terpolymer,
- a blend of an ethylene-propylene-1-butylene terpolymer and a propylene-1-butylene copolymer having an ethylene content of about 0.1% to about 7% by weight and a propylene content from about 50% to about 90% by weight and a content of 1-butylene from about 10% to about 40% by weight, with respect to the total weight of the polymeric blend.

In a particularly preferred embodiment the polyolefins of the outer layers (skin layers) are heat-sealing polypropylene polymers, whose content of polypropylene is 70%, more preferably 75-98% in weight, the remaining part to 100 being constituted by other comonomers, preferably ethylene and/or butene.

The multilayered films in accordance with the present invention generally have an overall thickness less than or equal to 80 µm, preferably less than or equal to 50 µm, more preferably less than or equal to 30 µm, even more preferably comprised between 20 µm and 9 µm,

In a particularly preferred embodiment the films have an overall thickness comprised between 12 and 20 µm, or between 15 and 20 µm.

Further features of the invention will be made clearer by the following detailed description, referring to a purely non-limiting example thereof, illustrated in the accompanying drawings in which:
Figure 1 is an exploded perspective and schematic view of a BOPP film;
Figure 2 is a schematic view of the apparatus for surface treatment in accordance with the present invention.

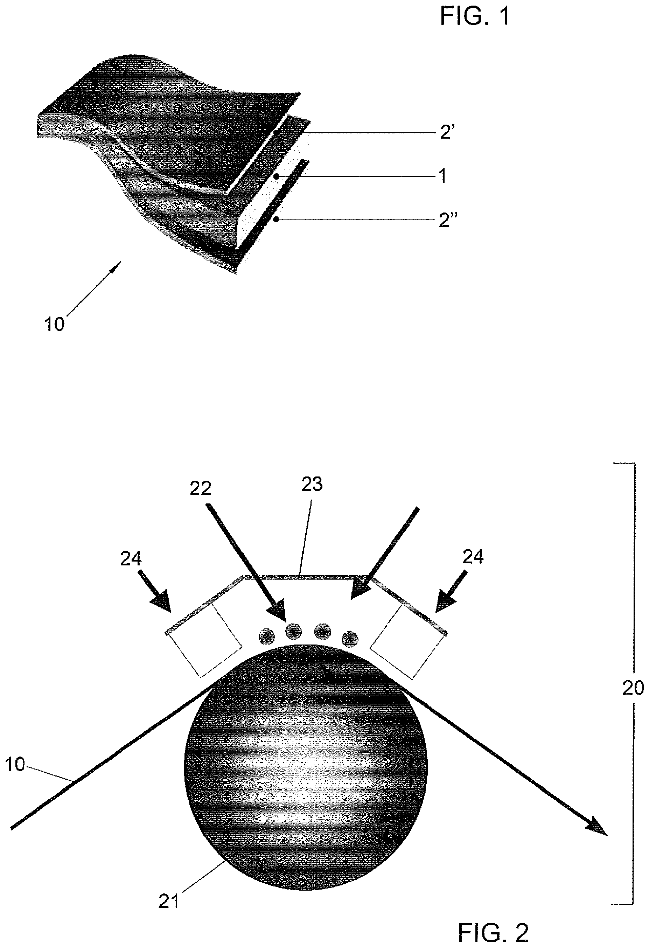

Referring to Figure 1, the film 10 of bi-oriented polypropylene BOPP, or of Cast polypropylene (oriented only longitudinally), to be treated on the surface in accordance with the invention comprises a polymeric core or central layer 1 comprised between two opposite and outer polymeric layers (skins) 2', 2".

Figure 1 shows a film of bi-oriented polypropylene BOPP typically formed by three polymeric layers where the central layer or core 1 is in general made of polypropylene homopolymer and the two opposite outer layers (skin layers) 2', 2" are in general constituted by a heat-sealing layer made of polyolefins and, if required, containing also additives. As polyolefins, heat-sealing polymers based on polypropylene are preferred whose content of polypropylene is 70%, more preferably 75-98% by weight, the remaining part to 100 being constituted by other comonomers, preferably ethylene and/or butene.

The free surface of at least one of said outer layers 2', 2" is made printable, metallizable, laminable or coatable by subjecting it to a flow of non-thermal plasma at a pressure higher than the atmospheric pressure, said plasma being formed essentially by a carrier gas selected from argon, helium, nitrogen or mixtures thereof, optionally containing one or more dopant gases as defined above, for example carbon dioxide (CO₂), hydrogen (H₂), acetylene (C₂H₂), ethylene (C₂H₄).

When the dopant gases as defined above are present in the plasma flow, their concentration with respect to the carrier gas is such as to meet the safety regulations and/or the limits of explosiveness of gaseous mixtures, and in any case preferably smaller than or equal to 2000 ppm.

"*Pressure higher than the atmospheric pressure*" is intended here to identify a greater pressure with respect to the atmospheric pressure such as to ensure the passage of the plasma flow inside the treatment apparatus, and means a pressure higher by 100-200 Pascal with respect to the atmospheric pressure.

The term "plasma treatment" at a pressure higher than the atmospheric pressure refers here to a process of dielectric barrier discharge with efficiency greater than the corona, with an improved configuration of the electrodes using process gases other than air: the Applicant has found that this plasma treatment produces a surface treatment of the polymeric film with high homogeneity, in particular improved with respect to the corona discharge treatment, with a greater surface uniformity of the level of wettability, more durable in time and without high thermal impact.

The plasma treatment has a degree of ionization of the process gas or of the mixture of process gases higher than the corona, since the rate of bombardment of the electrons (level of ionization) is 100 times higher than the corona.

This feature enables to obtain a more substantial etching of the surface of the polymeric film and consequently higher bonding between the polymeric radicals and the functional groups and a higher degree of crosslinking of the surface which limits the mobility of the chains, significantly slowing down the process of hydrophobic reconversion and allowing the surface wettability of the film to be stabilised in time. See for example what has been reported in Cernák M.a, Cernáková L'., Hudec I., Kovácik D. and Zahoranová A., Diffuse coplanar surface barrier discharge and its applications for in-line processing of low-added-valne materials, The European Physical Journal Applied Physics 47, 2 (2009), pp. 1-6.

Moreover the plasma treatment described above allows high surface wettability values to be reached (greater than 45 mN/m), limiting the formation of oligomers on the surface. The plasma discharge at atmospheric pressure is very even and homogeneous, unlike the corona discharge, and consequently does not produce pinholing.

In particular the abovementioned plasma treatment allows a surface wettability to be obtained greater than or equal to 38 mN/m, preferably greater than or equal to 40 mN/m, even more preferably greater than or equal to 45 mN/m, which is also durable for a prolonged period of longer than 6 months, preferably for at least 8-10 months, more preferably for a period longer than or equal to 12 months, even up to two years.

Without wishing to be restrained to any theory, it can be presumed that the higher pressure used in the present process, in combination with the specific gases used, allows a specific modulation of the surface chemistry of the film which determines a greater stability of the surface modification and therefore a greater duration in time of the surface wettability (mN/m) and an improved adhesion of the coating,

The working conditions of the plasma process used here to treat superficially at least one of the free outer surfaces of the films of the present invention, can be summarised as follows:
- electrical source is AC, at high frequency (18-50 kHz);
- ionization level is 10¹⁵/cm³;
- the electron temperature is 1-2 eV and ion temperature comprised between 23°C and 200°C;
- maximum rate of forward movement of the multilayered film is 1200 m²/min, preferably greater than 500 m²/min,

The plasma generated in this way is at ambient temperature and therefore is considered a non-thermal plasma or cold plasma whose ions are effectively at ambient temperature or a few hundreds of °C while the electrons have a temperature of a few electronvolts.

The process for the surface treatment used to obtain the aforesaid films treated in accordance with the invention comprises the step of
subjecting at least one outer surface of said multilayered, coextruded film, bi-oriented or cast, which contains at least one inner layer of polypropylene, to the contact with a single pressurised plasma flow comprising a carrier gas selected from argon, helium, nitrogen or mixtures thereof, optionally including one or more dopant gases as defined above, for example carbon dioxide (CO₂), hydrogen (H₂), acetylene (C₂H₂), ethylene (C₂H₄), inside a positive pressure chamber, i.e. preferably with pressure higher than 100-200 Pascal with respect to the atmospheric pressure, said flow being fed into said chamber with positive pressure with respect to the atmospheric pressure.

In said chamber therefore the outer surface of the multilayered coextruded film is subjected to a modified atmosphere, appropriately doped.

In particular, referring to Figure 2, the abovementioned plasma surface treatment process is carried out using an appropriate apparatus 20 which provides a roller 21 on which the film 10 to be treated slides and electrodes 22 apt to generate a flow of plasma.

The electrodes 22 are provided housed inside a chamber 23, or zone, of the apparatus insulated from the exterior. In said chamber 23 the gas or the mixture of gases 24 which is to be transformed into plasma will be fed at a pressure higher than the atmospheric pressure.

In practice this plasma treatment, with considerable advantage, allows the corona discharge treatment and flame treatment processes, known in the art, to be replaced, thus overcoming their limits and disadvantages.

Among the advantages of the present process of plasma surface treatment mention can also be made, as well as the lack of ozone, of a saving of 10% of CO₂ kg per m² of film treated compared to the flame treatment. This makes the present plasma process more sustainable from the environmental viewpoint.

The film 10 of the present invention, after having been subjected to the abovementioned surface treatment with plasma at a pressure higher than the atmospheric pressure, has advantageously the following combination of properties:
- greater surface homogeneity and uniformity of the treatment;
- lower degradation of the level of treatment over time;
- improved adhesion of the metal and/or coating, also in terms of uniformity;
- improved properties of barrier to humidity and to gases in the case of films treated with plasma and subsequently metallized or coated with other coatings.

The abovementioned considerations are applicable to films with a thickness lower than or equal to 80 µm, preferably lower than or equal to 50 µm, more preferably lower than or equal to 30 µm, even more preferably comprised between 20 µm and 9 µm.

In the case of a BOPP film plasma treated with the process described above and metallized, having an overall thickness equal to approximately 15 µm, the following typical properties are obtained:
adhesion of the metal (AIMCAL TP-105-92 method): 2 N/25mm
permeability to O₂ (OTR-ASTM D3985): 10 cm³/m²/day (23°C, 0% RH)
permeability to humidity (WVTR-ASTM F1249): 0.08 g/m²/day (38°C, 90% RH);
the same type of film with the same overall thickness yet having the polypropylene surface treated superficially with a corona discharge treatment unit has the following values:
   adhesion of the metal (AIMCAL TP-105-92 method): 1.4 N/25 mm
   permeability to O₂ (OTR-ASTM D3985): 30 cm³/m²/day (23°C, 0% RH)
   permeability to humidity (WVTR-ASTM F1249): 0.15 g/m²/day (38°C, 90% RH).

It is understood that the present process can be applied also to films of BOPP or films of cast polypropylene, comprising more than three layers, for example five, seven or more layers, where intermediate layers or interlayers are also provided, placed between said central layer 1 and said outer layers 2', 2" according to the requirements of the end-use of the film.

It should be noted that the films to be used as substrate whose outer free surface has been treated with plasma in accordance with the invention, having a thickness smaller than or equal to 80 µm, preferably smaller than or equal to 50 µm, more preferably smaller than or equal to 30 µm, show excellent printability and adhesion of the print to the treated surface, evaluated as a difference of colour (colour match) ΔE, wherein ΔE is less than or equal to 10, FINAT method no. 22.

As already mentioned, thanks to the present process of surface treatment it is possible to obtain metallized, printed, lacquered, coated, laminated films with an excellent combination of properties.

For example a film of metallized BOPP for a thickness smaller than or equal to 20 µm, obtained by deposition of aluminium the free surface of a film surface-treated in accordance with the present invention, exhibits typically the following properties:
- adhesion of the metal (AIMCAL TP-105-92 method): ≥1.7N/25mm, preferably≥ 2 N/25mm;
- permeability to O₂ (OTR - ASTM D3985): ≤ 20, preferably ≤ 15, more preferably ≤ 10 cm³/m²/day (23°C, 0% RH);
- permeability to humidity (WVTR - ASTM F1249): ≤ 0.15, preferably ≤0.10, more preferably ≤ 0.08 g/m²/day (38°C, 90% RH).

In the case of a film whose free surface has been treated with plasma according to the present invention and covered by a deposit of AlOₓ it has the following properties (for a thickness smaller than or equal to 20 µm):
permeability to humidity (WVTR - ASTM F1249): ≤ 2, preferably ≤ 1.5 cm³/m²/day (38°C, 90% RH)
permeability to O₂ (OTR - ASTM D3985): ≤ 500, preferably ≤ 300 cm³/m²/day (23°C, 0% RH).

It is also understood that the plasma treatment in accordance with the present invention can be performed on both the free surfaces of the two opposite outer layers, should said two layers be intended both to be subjected to processes of coating, identical to or one different from the other.

The present invention is not limited to the particular embodiments previously described and illustrated in the accompanying drawings, but numerous detailed changes may be made thereto, within the reach of the person skilled in the art, without thereby departing from the scope of the invention itself as defined in the appended claims.

## Claims

1. Process for conferring to a bi-oriented or cast multilayer coextruded film a surface wettability greater than or equal to 38 mN/m, preferably equal to or greater than 45 mN/m, durable for a period longer than 6 months, preferably for a period of at least 10 months,
said film containing
at least one inner layer of polypropylene and two opposing outer layers (2', 2"), identical to or different one from the other, comprising at least one olefin(s)-based polymer,
a free surface of at least one of said outer layers (2', 2") being intended for printing, metallizing, lamination or other coatings,
said process comprising the step of
subjecting, in a chamber with positive pressure, i.e. with a pressure of 100-200 Pascal higher than the atmospheric pressure, said free surface of at least one of the opposite outer layers of said film to the contact with a non-thermal plasma flow with positive pressure with respect to the atmospheric pressure,
said plasma being generated essentially by an inert carrier gas selected from argon, helium, nitrogen or mixtures thereof.

2. Process according to claim 1, wherein said carrier gas further contains one or more dopant gases in a concentration smaller than or equal to 2000 ppm with respect to the carrier gas.

3. Process according to claim 1 or 2, wherein said plasma is obtained under the following conditions
- electrical source, AC, at high frequency (18-50 kHz);
- level of ionization about 10¹⁵/cm³;
- electron temperature of about 1-2 eV; ion temperature comprised between 23°C and 200°C;
- maximum rate equal to 1200 m²/min, preferably greater than 500 m²/min.

4. Bi-oriented or cast multilayer coextruded films which contain
at least one inner layer of polypropylene and two opposing outer layers (2', 2"), identical to or different one from the other, comprising at least one olefin(s)-based polymer,
the free surface of at least one of said outer layers (2', 2") being intended for printing, metallizing, lamination or other coatings,
**characterised in that** said at least one free surface of said outer layer (2', 2") has a surface wettability greater than or equal to 45 mN/m, durable for a period of at least 10 months, more preferably for a period longer than or equal to 12 months,
said at least one free surface being pre-treated with a non-thermal plasma flow, at a pressure of 100-200 Pascal higher than the atmospheric pressure,
said plasma being generated essentially by an inert carrier gas selected from argon, helium, nitrogen or mixtures thereof.

5. Bi-oriented or cast multilayer coextruded films according to claim 4, wherein said carrier gas further contains one or more dopant gases in a concentration smaller than or equal to 2000 ppm with respect to the carrier gas

6. Films according to claim 4 or 5 in the form of bi-oriented polypropylene film (BOPP) or cast polypropylene film.

7. Films according to any one of the preceding claims 4 to 6 having a thickness less than or equal to 80 µm, preferably less than or equal to 50 µm, more preferably less than or equal to 30 µm.

8. Metallized, printed, laminated, lacquered films or films with other coatings comprising the coextruded film as defined in the preceding claims 4-7.

9. Coated film according to claim 8 wherein when the plasma-treated free surface is coated by an aluminium deposit forming a metallized BOPP film, said film exhibits the following properties (referring to a thickness less than or equal to 20 µm) adhesion of the metal (AIMCAL TP-105-92 method): ≥1.7N/25mm, preferably≥ 2 N/25mm;
permeability to O₂ (OTR - ASTM D3985): ≤ 20, preferably ≤ 15, more preferably ≤ 10 cm³/m²/day (23°C, 0% RH);
permeability to humidity (WVTR - ASTM F1249): ≤ 0.15, preferably ≤0.10, more preferably ≤ 0.08 g/m²/day (38°C, 90% RH).

10. Coated film according to claim 9 wherein when the plasma-treated free surface is covered by an AlOₓ deposit, it exhibits the following properties (referring to a thickness smaller than or equal to 20 µm)
permeability to humidity (WVTR - ASTM F1249): ≤ 2, preferably ≤ 1.5 cm³/m²/day (38°C, 90% RH)
permeability to O₂ (OTR - ASTM D3985): ≤ 500, preferably ≤ 300 cm³/m²/day (23°C, 0% RH).

11. Film according to claim 4 or 5, having a thickness less than or equal to 80 µm, preferably less than or equal to 50 µm, more preferably less than or equal to 30 µm, whose free surface has been treated with plasma, exhibits a high printability and adhesion of the print to the treated surface, evaluated as a difference of colour ΔE, wherein ΔE is less than or equal to 10, according to the FINAT method no. 22.

## Patentansprüche

1. Verfahren zum Verleihen, einer bi orientierten oder gegossenen, mehrschichtigen, coextrudierten Folie, einer Oberflächenbenetzbarkeit von mehr als oder gleich 38 mN/m, bevorzugt gleich oder mehr als 45 mN/m, auf dauerhafte Weise für eine Zeitspanne länger als 6 Monate, bevorzugt für eine Zeitspanne von mindestens 10 Monaten,
wobei die Folie Folgendes enthält
mindestens eine Innenschicht aus Polypropylen und zwei entgegengesetzte Außenschichten (2', 2"), die identisch oder voneinander verschieden sind, umfassend mindestens ein Polymer auf der Basis von Olefin(en),
eine freie Oberfläche von mindestens einer der Außenschichten (2', 2"), die für das Bedrucken, Metallisieren, Laminieren oder andere Beschichtungen bestimmt ist, wobei das Verfahren die Schritte umfasst des
Unterwerfens, in einer Kammer mit positivem Druck, d.h. mit einem Druck, der 100-200 Pascal höher als der Luftdruck ist, der freien Oberfläche von mindestens einer der entgegengesetzten Außenschichten der Folie, dem Kontakt mit einem nichtthermischem Plasmafluss mit positivem Druck mit Bezug auf den Luftdruck, wobei das Plasma im Wesentlichen durch ein inertes Trägergas ausgewählt unter Argon, Helium, Stickstoff oder Mischungen davon erzeugt wird.

2. Verfahren nach Anspruch 1, wobei das Trägergas ferner ein oder mehrere Dotiergase in einer Konzentration von weniger als oder gleich 2000 ppm mit Bezug auf das Trägergas enthält.

3. Verfahren nach Anspruch 1 oder 2, wobei das Plasma unter den folgenden Bedingungen erhalten wird
- elektrische Quelle, Wechselstrom, mit Hochfrequenz (18-50 kHz);
- Ionisationsniveau etwa 10¹⁵/cm³;
- Elektronentemperatur etwa 1-2 eV; Ionentemperatur zwischen 23 °C und 200 °C;
- maximale Rate gleich 1200 m²/min, bevorzugt mehr als 500 m²/min.

4. Biorientierte oder gegossene, mehrschichtige, coextrudierte Folie, die Folgendes enthält
mindestens eine Innenschicht aus Polypropylen und zwei entgegengesetzte Außenschichten (2', 2"), die identisch oder voneinander verschieden sind, umfassend mindestens ein Polymer auf der Basis von Olefin(en),
wobei die freie Oberfläche mindestens einer der Außenschichten (2', 2") für das Bedrucken, Metallisieren, Laminieren oder andere Beschichtungen bestimmt ist, **dadurch gekennzeichnet, dass** mindestens eine freie Oberfläche der Außenschicht (2', 2") eine Oberflächenbenetzbarkeit von mehr als oder gleich 45 mN/m auf dauerhafte Weise für eine Zeitspanne länger als 10 Monate, bevorzugter für eine Zeitspanne länger als oder gleich 12 Monate aufweist,
wobei mindestens eine freie Oberfläche mit einem nichtthermischem Plasmafluss bei einem Druck vorbehandelt wird, der 100-200 Pascal höher als der Luftdruck ist, wobei das Plasma im Wesentlichen durch ein inertes Trägergas ausgewählt unter Argon, Helium, Stickstoff oder Mischungen davon erzeugt wird.

5. Biorientierte oder gegossene, mehrschichtige, coextrudierte Folie nach Anspruch 4, wobei das Trägergas ferner ein oder mehrere Dotiergase in einer Konzentration von weniger als oder gleich 2000 ppm mit Bezug auf das Trägergas enthält.

6. Folien nach Anspruch 4 oder 5 in Form von biorientierter Polypropylenfolie (BOPP) oder gegossener Polypropylenfolie.

7. Folien nach einem der vorhergehenden Ansprüche 4 bis 6, die eine Dicke von weniger als oder gleich 80 µm, bevorzugt weniger als oder gleich 50 µm, noch bevorzugter weniger als oder gleich 30 µm aufweisen.

8. Metallisierte, bedruckte, laminierte, lackierte Folien oder Folien mit anderen Beschichtungen, umfassend die coextrudierte Folie wie in einem der vorhergehenden Ansprüche 4-7 definiert.

9. Beschichtete Folie nach Anspruch 8, wobei, wenn die plasmabehandelte, freie Oberfläche durch eine Aluminiumablagerung unter Bildung einer metallisierten BOPP-Folie geschichtet wird, die Folie die folgenden Eigenschaften aufweist (die sich auf eine Dicke von weniger als oder gleich 20 µm beziehen)
Haftung des Metalls (AIMCAL TP-105-92-Verfahren): ≥ 1,7 N/25 mm, bevorzugt ≥ 2 N/25 mm;
Durchlässigkeit für O₂ (OTR - ASTM D3985): ≤ 20, bevorzugt ≤ 15, noch bevorzugter ≤ 10 cm³/m²/Tag (23 °C, 0 % r.F);
Durchlässigkeit für Feuchtigkeit (Wasserdampfdurchlässigkeit - ASTM F1249): ≤ 0,15, bevorzugt ≤ 0,10, noch bevorzugter ≤ 0,08 g/m²/Tag (38 °C, 90 % r.F).

10. Beschichtete Folie nach Anspruch 9, wobei, wenn die plasmabehandelte, freie Oberfläche durch eine AlOₓ-Ablagerung beschichtet wird, sie die folgenden Eigenschaften aufweist (die sich auf eine Dicke von weniger als oder gleich 20 µm beziehen)
Durchlässigkeit für Feuchtigkeit (Wasserdampfdurchlässigkeit - ASTM F1249): ≤ 2, bevorzugt ≤ 1,5 cm³/m²/Tag (38 °C, 90 % r.F).
Durchlässigkeit für O₂ (OTR - ASTM D3985): ≤ 500, bevorzugt ≤ 300 cm³/m²/Tag (23 °C, 0 % r.F).

11. Folie nach Anspruch 4 oder 5, die eine Dicke von weniger als oder gleich 80 µm, bevorzugt weniger als oder gleich 50 µm, noch bevorzugter weniger als oder gleich 30 µm aufweist, deren freie Oberfläche mit Plasma behandelt worden ist und die eine hohe Bedruckbarkeit und Haftung des Drucks an der behandelten Oberfläche, als Unterschied der Farbe ΔE, wobei ΔE weniger als oder gleich 10, der FINAT-Methode Nr. 22 entsprechend beurteilt, beträgt, aufweist.

## Revendications

1. Procédé pour conférer à un film coextrudé multi-couches bi-orienté ou moulé une mouillabilité de surface supérieure ou égale à 38 mN/m, de préférence supérieure ou égale à 45 mN/m, durable pour une période plus longue que 6 mois, de préférence pour une période d'au moins 10 mois,
ledit film contenant
au moins une couche interne de polypropylène et deux couches opposées externes (2', 2") identiques ou différentes l'une de l'autre, comprenant au moins un polymère à base d'oléfine(s),
une surface libre d'au moins une desdites couches externes (2', 2") étant destinée pour l'impression, la métallisation, la lamination ou d'autres revêtements,
ledit procédé comprenant l'étape de
soumission, dans une chambre avec une pression positive, c'est-à-dire avec une pression de 100 à 200 pascals supérieure à la pression atmosphérique, ladite surface libre d'au moins une des couches externes opposées dudit film au contact avec un écoulement de plasma non thermique avec une pression positive par rapport à la pression atmosphérique,
ledit plasma étant produit essentiellement par un gaz porteur inerte choisi parmi l'argon, l'hélium, l'azote ou leurs mélanges.

2. Procédé selon la revendication 1, dans lequel ledit gaz porteur contient en outre un ou plusieurs gaz dopants à une concentration inférieure ou égale à 2 000 ppm par rapport au gaz inerte.

3. Procédé selon la revendication 1 ou 2, dans lequel ledit plasma est obtenu sous les conditions suivantes
- une source électrique, AC, à haute fréquence (18 à 50 kHz) ;
- un niveau d'ionisation d'environ 10^{15/}cm³ ;
- une température d'électrons d'environ 1 à 2 eV ; une température d'ions comprise entre 23 °C et 200 °C ;
- une vitesse maximum égale à 1200 m²/min, de préférence supérieure à 500 m²/min.

4. Films coextrudés multi-couches bi-orientés ou moulés qui contiennent au moins une couche interne de polypropylène et deux couches externes opposées (2', 2") identiques ou différentes l'une de l'autre, comprenant au moins un polymère à base d'oléfine(s),
la surface libre d'au moins une desdites couches externes (2', 2") étant destinée à l'impression, la métallisation, la lamination ou d'autres revêtements,
**caractérisée en ce que** ladite au moins une surface libre de ladite couche externe (2', 2") a une mouillabilité de surface supérieure ou égale à 45 mN/m, durable pour une période d'au moins 10 mois, davantage de préférence pour une période supérieure ou égale à 12 mois,
ladite au moins une surface libre étant pré-traitée avec un écoulement de plasma non thermique, à une pression de 100 à 200 Pascals supérieure à la pression atmosphérique,
ledit plasma étant produit essentiellement par un gaz porteur inerte choisi parmi l'argon, l'hélium, l'azote ou leurs mélanges.

5. Films coextrudés multi-couches bi-orientés ou moulés selon la revendication 4, dans lesquels ledit gaz porteur contient en outre un ou plusieurs gaz dopants à une concentration inférieure ou égale à 2 000 ppm par rapport au gaz porteur.

6. Films selon la revendication 4 ou 5 sous la forme de film de polypropylène bi-orienté (BOPP) ou film de polypropylène moulé.

7. Film selon l'une quelconque des revendications précédentes 4 à 6, ayant une épaisseur inférieure ou égale à 80 µm, de préférence inférieure ou égale à 50 µm, davantage de préférence inférieure ou égale à 30 µm.

8. Films métallisés, imprimés, laminés, laqués ou films avec d'autres revêtements comprenant le film coextrudé tel que défini dans les revendications précédentes 4 à 7.

9. Film revêtu selon la revendication 8, dans lequel la surface libre traitée au plasma est revêtue par un dépôt d'aluminium formant un film métallisé BOPP, ledit film présente les propriétés suivantes (se rapportant à une épaisseur inférieure ou égale à 20 µm)
adhésion du métal (procédé AIMCAL TP-105-92) ; ≥ 1,7 N/25 mm, de préférence ≥ 2 N/25 mm ;
perméabilité à O₂ (OTR-ASTM D3985) : ≤ 20, de préférence ≤ 15, davantage de préférence ≤ 10 cm³/m²/jour (23 °C, 0 % HR) ;
perméabilité à l'humidité (WVTR-ASTM F1249) : ≤ 0,15, de préférence ≤ 0,10, davantage de préférence ≤ 0,08 g/m²/jour (38 °C, 90 % HR).

10. Film revêtu selon la revendication 9, dans lequel la surface libre traitée au plasma est recouverte par un dépôt d'AlOx, elle présente les propriété suivantes (se rapportant à une épaisseur inférieure ou égale à 20 µm)
perméabilité à l'humidité (WVTR-ASTM F1249) : ≤ 2, de préférence ≤ 1,5 cm³/m²/jour (38 °C, 90 % HR)
perméabilité à O₂ (OTR-ASTM D3985) : ≤ 500, de préférence ≤ 300 cm³/m²/jour (23 °C, 0 % HR).

11. Film selon la revendication 4 ou 5, ayant une épaisseur inférieure ou égale à 80 µm, de préférence inférieure ou égale à 50 µm, davantage de préférence inférieure ou égale à 30 µm, dont la surface libre a été traitée avec un plasma, présente une imprimabilité élevée et une adhésion de l'impression à la surface traitée, évaluée comme une différence de couleur ΔE, ΔE étant inférieure ou égale à 10, selon le procédé FINAT n° 22.
